# EUROPÄISCHE PATENTANMELDUNG

(11) **EP 4 844 593 A1**
(43) Veröffentlichungstag der Anmeldung: **25.11.2026**
(21) Anmeldenummer: 26171939.7
(22) Anmeldetag: 13.04.2026
(51) Int. Cl.: G06F 11/3668, B60W 60/00

(54) **VERFAHREN UND SYSTEM ZUM TESTEN WENIGSTENS EINES SUB-SYSTEMS EINER E/E-FAHRZEUGARCHITEKTUR**

(30) Priorität: 16.05.2025 DE 102025119181
(71) Anmelder: Stellantis Auto SAS, 78300 Poissy (FR); FCA US LLC, Auburn Hills, MI 48326-2766 (US)
(72) Erfinder: BONARENS, Frank, 65428 RÜSSELSHEIM AM MAIN (DE); BALD, Heiko, 65428 RÜSSELSHEIM AM MAIN (DE)
(74) Vertreter: ESIP

(57) **Zusammenfassung**

Die vorliegende Offenbarung betrifft ein Verfahren zum Testen wenigstens eines Sub-Systems einer E/E-Fahrzeugarchitektur für ein Fahrzeug. Ein Prüfstandfahrzeugsystem (100b) wird mit Einrichtungen der E/E-Fahrzeugarchitektur auf einem Prüfstand (4) angeordnet und mit einem Simulationssystem (400) verbunden. Ein Ausgansszenario, das mit einer unplausiblen Systemreaktion des zu testenden Sub-Systems korrespondiert, wird mit dem Simulationssystem (400) basierend auf mit dem Ausgangsszenario zeitlich korrespondierenden aufgezeichneten Daten nachgebildet, wobei durch das Simulationssystem (400) ein synthetisches Eingangsszenario erzeugt wird, und wobei aus dem synthetischen Eingangsszenario zugehörige Eingangsdaten abgeleitet an die Einrichtungen auf dem Prüfstand (4) kommuniziert werden. Das synthetische Eingangsszenario wird solange variiert, bis das zu testende Sub-System eine der unplausiblen Systemreaktion vergleichbare Reaktion zeigt, so dass eine zur vergleichbaren Reaktion zugehörige Variation des synthetische Eingangsszenario als ein nachgebildetes Szenario ausgewählt wird. Die vorliegende Offenbarung betrifft ferner ein Computerprogramm sowie ein System zum Testen wenigstens eines Sub-Systems einer E/E-Fahrzeugarchitektur.

## Beschreibung

### Technisches Gebiet

Die Erfindung betrifft ein Verfahren und System zum Testen wenigstens eines Sub-Systems einer E/E-Fahrzeugarchitektur für ein Fahrzeug. Ferner betrifft die Erfindung ein Computerprogramm.

### Stand der Technik

In jedem Fahrzeugentwicklungsprojekt ist es notwendig, die Funktionen und Einrichtungen eines elektrischen/elektronischen (E/E) Fahrzeugsystems für ein Kraftfahrzeug integriert zu testen, um das Design einer E/E-Architektur schrittweise zu validieren und/oder um Fehler in dem Fahrzeugsystem zu finden.

Eine Integrationsvalidierung in einer früheren Fahrzeugentwicklungsphase zielt im Wesentlichen auf einen exemplarischen Nachweis von Funktionen und deren Fehlerfreiheit gemäß ihren funktionalen Anforderungen ab. Ziel einer vollständigen Systemvalidierung ist, Funktion und deren Fehlerfreiheit aller funktionalen Anforderungen eines Fahrzeugsystem für eine Vielzahl von Testszenarien nachzuweisen, die für alle wesentlichen Betriebsszenarien eines realen Fahrzeugbetriebs repräsentativ sind.

Ein Testen für eine Integrationsvalidierung kann beispielsweise mit einem Prototypenfahrzeug erfolgen, das ein zu testendes elektronisches Fahrzeugsystem umfasst und mit dem reale Testfahrten auf einem Prüffeld und/oder im realen Straßenverkehr durchgeführt werden.

Alternativ und/oder ergänzend kann das elektronische Fahrzeugsystem auf einem Prüfstand (engl. Testbench) getestet werden, der eine fortlaufend aktualisierte Version aller elektrischen und elektronischen Komponenten, wie Steuergeräte, Kabelsätze, Sensoren, Aktoren, Displays, Schalterleisten usw. mit aktueller Software und Kalibrierdaten, einer jeweiligen Fahrzeugarchitektur enthält. Ein prüfstandbasiertes Testen hat gegenüber einem Testen von Prototypen, Vorserienfahrzeugen und Serienfahrzeugen den Vorteil, dass immer eine konsistente Referenzimplementierung herangezogen werden kann. Ferner kann ein Testen auf einem Prüfstand automatisiert mittels Hardware-In-The-Loop (HIL) Methoden erfolgen, wobei eine Vielzahl von konkreten Testszenarien, die für die Validierung der funktionalen Anforderungen relevant sind, mit einem Simulationssystem simuliert werden können, das mit dem HIL-Prüfstand verbunden ist.

Während einer Integrationsvalidierung, d.h. in einer frühen Entwicklungsphase, treten unweigerlich Fehler oder unplausible bzw. unerwartete Systemreaktionen auf. Eine Suche nach möglichen Ursachen für eine fehlerhafte Systemreaktion kann sich mitunter sehr schwierig gestalten, da eine Bedingung, unter der ein Fehler aufgetreten ist, zur Fehlersuche nur bedingt reproduzierbar ist. Insbesondre bei Fahrerassistenzsystemen (engl. Advanced Driver Assistance Systems, ADAS) oder anderen Systemen, die Signale von einer Umfeldsensorik verarbeiten, also mit einem Fahrzeugumfeld bzw. mit einem aktuellen Verkehrsszenario interagieren, ist die Reproduzierbarkeit besonders herausfordernd.

Ein Verkehrsszenario, bei dem während einer Testfahrt mit einem Testfahrzeug ein Fehler im Fahrzeugsystem aufgetreten ist, kann im Realverkehr mit einer entsprechenden Komplexität nicht reproduzierbar wiederholt werden. Für eine Fehler- bzw. Ursachensuche unter reproduzierbaren Bedingungen stellt das Testen des elektronischen Fahrzeugsystems auf einem Prüfstand ein probates Mittel dar.

Ein Fahrerassistenzsystem kann beim Testen auf einem Prüfstand jedoch ein verändertes Systemverhalten zeigen, als ein im Wesentlichen identisches Fahrerassistenzsystem, das während einer realen Testfahrt im Fahrzeug einen zu untersuchenden Fehler aufwies. Für die Untersuchungen auf dem Prüfstand muss das Umfeld eines Fahrzeugs in einem relevanten Szenario geeignet nachgebildet werden, mit dem das zu testende Fahrerassistenzsystem interagieren soll. Bei einem synthetisch generierten Testszenario sind zumindest geringere Abweichungen hinsichtlich der Eingangsdaten bzw. Signalen unausweichlich, die durch die zu testenden Einrichtungen des Fahrerassistenzsystem verarbeitet werden sollen. Diese Abweichungen können in einem verwendeten Umfeld-Modell oder einem Umfeld-Sensor-Modell begründet liegen, mit dem ein Simulator das reale Szenario der Testfahrt lediglich mit endlicher Genauigkeit nachbilden und entsprechende Daten bzw. Signale erzeugen kann.

Durch diese Abweichungen im Systemverhalten des Prüfstands gestaltet sich eine Ursachensuche erfahrungsgemäß oft sehr aufwendig, wobei die Ursache ggf. auch nicht gefunden werden kann.

### Kurzbeschreibung der Erfindung

Vor diesem Hintergrund liegt der Erfindung die Aufgabe zugrunde, das Verhalten eines Fahrzeugsystems in einem Fahrzeug besser auf einem Prüfstand nachzubilden, wobei die Nachbildung des Systemverhaltens robuster gegenüber geringen Abweichungen ist. Vorgeschlagen wird dementsprechend ein Verfahren gemäß dem Hauptanspruch sowie ein Computerprogramm und ein System gemäß den Nebenansprüchen. Weiterführende Ausgestaltungen sind Gegenstand der jeweils abhängigen Ansprüche.

Gemäß einem ersten Aspekt der Erfindung wird die Aufgabe gelöst durch ein Verfahren zum Testen wenigstens eines Sub-Systems einer E/E-Fahrzeugarchitektur für ein Fahrzeug, wobei ein Prüfstandfahrzeugsystem mit Einrichtungen der E/E-Fahrzeugarchitektur auf einem Prüfstand angeordnet und mit einem Simulationssystem verbunden wird.

Ein Ausgansszenario, das mit einer unplausiblen Systemreaktion des zu testenden Sub-Systems korrespondiert, wird mit dem Simulationssystem und basierend auf mit dem Ausgangsszenario zeitlich korrespondierenden aufgezeichneten Daten nachgebildet, wobei durch das Simulationssystem ein synthetisches Eingangsszenario erzeugt wird, und wobei aus dem synthetischen Eingangsszenario zugehörige Eingangsdaten abgeleitet und an die Einrichtungen auf dem Prüfstand kommuniziert werden. Das synthetische Eingangsszenario wird solange variiert, bis das zu testende Sub-System eine der unplausiblen Systemreaktion vergleichbare Reaktion zeigt. Eine zur vergleichbaren Reaktion zugehörige Variation des synthetischen Eingangsszenarios wird als ein nachgebildetes Szenario ausgewählt.

Das Sub-System eines Fahrzeugsystems kann ein Fahrerassistenzsystem sein, dass beispielsweise eine mikroprozessorbasierte Steuereinrichtung umfasst. Eine solche Steuereinrichtung ist allgemein ausgebildet, basierend auf Eingangsdaten bestimmte Ausgangsdaten gemäß einer definierten ADAS-Funktion zu erzeugen, mit denen zum Beispiel Warnmeldungen und/oder Eingriffe in die Längs- und/oder Querführung eines Fahrzeugs ausgelöst bzw. gesteuert werden können. Die Eingangsdaten können Informationen über ein aktuelles Fahrzeugumfeld umfassen, die von einer Umfeldsensorik und gegebenenfalls im Zusammenwirken mit einer Einrichtung zur Umfeldmodellierung erfasst und bereitgestellt werden. Die Umfeldsensorik kann eine Kamera umfassen, deren Bildsignale einer Objekterkennungseinrichtung zugeführt werden. Mittels der Objekterkennungseinrichtung kann eine Liste mit erkannten und klassifizierten Objekten im aktuellen Fahrzeugumfeld erzeugt und über das Fahrzeugsystem an die Steuereinrichtung kommuniziert werden. Das Sub-System kann also durch ein Zusammenspiel von mehreren elektronischen Einrichtungen in einem Netzwerk eines Fahrzeugsystems gebildet werden. Ein zu testendes Subsystem besitzt zumindest eine testrelevante Einrichtung mit wenigstens einer Softwarekomponente, die in einem oder über mehrere mikroprozessorbasierte Fahrzeugsteuergeräte eines Fahrzeugsystems verteilt eingebettet ist. Auf dem Prüfstand wird zumindest eine elektronische Einrichtung angeordnet, die für das zu testende Sub-System relevante Funktionen beinhaltet.

Eine Steuereinrichtung kann beispielsweise ein Bestandteil eines Notbremsassistenzsystems (engl. Advanced Emergency Braking System, AEBS) bilden, und dazu ausgebildet sein, basierend auf einer Objektliste sowie auf Bewegungsdaten über das eigene Fahrzeug, eine drohende Kollision mit einem Objekt im Umfeld zu ermitteln und ein Ausgangssignal zum Auslösen einer automatischen Notbremsung auszugeben.

Das Fahrzeugsystem kann eine Vielzahl von Fahrzeugsteuergeräte, Sensoren und/oder Aktoren besitzen, die zum Datenaustausch durch ein Steuergerätenetzwerk miteinander vernetzt sind. Das Steuergerätenetzwerk kann beispielsweise wenigstens einen CAN-Bus (engl. Controller Area Network) und/oder andere Netzwerksysteme wie, Automotive Ethernet, FlexRay etc. beinhalten. Teilnetzwerke eines Steuergerätenetzwerks, die auf unterschiedlichen Kommunikationsprotokollen beruhen, können über wenigstens ein Gateway miteinander verbunden sein. Über das Fahrzeugsystem werden Daten mit Sensor-, Aktor- und/oder Steuergeräteinformationen mittels Nachrichten kommuniziert und für andre Kommunikationsteilnehmer bereitgestellt.

Unter einem Szenario kann ein Verkehrsszenario verstanden werden, in dem sich das Fahrzeug mit dem zu testenden Sub-System (System under Test, SuT) befindet und das durch die Bewegungen des Fahrzeugs und anderen Objekten im Umfeld sowie einer Straßenführung des Umfelds über einen relevanten Zeitraum beschrieben werden kann. Eine unplausible Reaktion kann eine falsch-positive und/oder eine falsch-negative Auslösung des SuT sein. Ferner kann eine Über- und/oder eine Unterreaktion in einer Längs- und oder Querführung des Fahrzeugs unplausibel sein.

Eine unplausible Reaktion kann beim Beispiel einer ADAS-Gefahrenbremsung ein Bremseingriff sein, der für einen durchschnittlichen Fahrer im Zusammenhang mit einem aktuellen realen Verkehrsszenario objektiv nicht nachvollziehbar wäre.

Eine Idee hinter der vorliegenden Erfindung besteht darin, ein Ausgangsszenario, bei dem das Sub-System ein unerwartetes Verhalten bzw. eine unplausible Systemantwort gezeigt hat, auf einem Prüfstand nachzubilden. Durch die Variation von synthetischen Eingangsszenarien wird ein nachgebildetes Szenario ermittelt, bei dem die unplausible Systemantwort auch auf dem Prüfstand auftritt. Dieses nachgebildete Szenario kann zur systematischen prüfstandsbasierten Ursachenanalyse genutzt werden.

Gemäß einer Weiterbildung des Verfahrens kann ein Fahrzeugsystem der E/E-Fahrzeugarchitektur, die in einem Fahrzeug integriert angeordnet ist, mit einer Datenaufzeichnungseinrichtung verbunden werden. Während einer Testfahrt mit dem Fahrzeug können im E/E-Fahrzeugsystem erfasste und/oder kommunizierte Daten aufgezeichnet werden, wobei Szenarien während der Testfahrt, bei denen eine unplausible Reaktion des Sub-Systems festgestellt wurde, in den aufgezeichneten Daten markiert werden.

Bei dem genannten Beispiel einer ADAS-Gefahrenbremsung kann ein unplausibler Bremseingriff während der Testfahrt durch einen Testfahrer festgestellt werden. Ein Markieren in der Datenaufzeichnung kann beispielsweise über einen Taster oder ein anderes Eingabemittel erfolgen, dass mit der Datenaufzeichnungseinrichtung verbunden ist.

Das Ausgangsszenario stellt eine reales konkretes Szenario dar, bei dem während der Testfahrt eine unplausible Systemreaktion festgestellt worden ist.

Die aufgezeichneten Daten können unteranderem Steuergerätedaten enthalten, die von den elektronischen Einrichtungen im Fahrzeugsystem während der Testfahrt untereinander kommuniziert wurden. Ferner können Rohdatenströme von der Umfeldsensorik des Fahrzeugs, beispielsweise Bildsignaldaten einer ADAS-Kamera aus dem Fahrzeugumfeld, in den aufgezeichneten Daten enthalten sein.

Gemäß einer Weiterbildung des Verfahrens kann basierend auf den zeitlich zu dem Ausgansszenario korrespondierenden aufgezeichneten Daten, eine parametrisierte Ego-Trajektorie des Fahrzeugs bestimmt werden.

Eine Ego-Trajektorie kann beispielsweise aus aufgezeichneten Längs- und Querbewegungs- bzw. Beschleunigungsdaten des Fahrzeugs ermittelt werden. Alternativ und/oder ergänzend können aufgezeichnete relative und/oder absolute Positionsdaten des Fahrzeugs, beispielsweise GNNS-Daten (engl. global navigation satellite system) zur Bestimmung der Ego-Trajektorie herangezogen werden.

Gemäß einer Weiterbildung des Verfahrens können basierend auf zeitlich zu dem Ausgansszenario korrespondierenden aufgezeichneten Umfelddaten des Fahrzeugs, Objekte erkannt werden, wobei für erkannte dynamische Objekte jeweils eine parametrisierte Trajektorie bestimmt werden kann.

Ausgehend von dem aufgezeichneten Ausgangsszenario, das von einem Testfahrer markiert wurde, können, durch das Simulationssystem, automatisiert Trajektorien für das Fahrzeug und andere dynamische Objekte in seinem Fahrzeugumfeld erzeugt werden, mit denen ein Eingangsszenario zur simulationsbasierten synthetischen Nachbildung des aufgezeichneten Ausgangsszenarios beschrieben werden kann.

Gemäß einer Weiterbildung des Verfahrens können die Objekte mittels einer Kl-basierten Objekterkennung, insbesondere mittels einer semantischen Segmentierung erkannt werden.

Durch eine semantische Segmentierung können Fahrbahnen, statische und dynamische Objekte detektiert und voneinander unterschieden werden.

Gemäß einer Weiterbildung des Verfahrens kann daher vorgesehen sein, die synthetischen Eingangsszenarien basierend auf den parametrisierten Trajektorien der dynamischen Objekte und der parametrisierten Ego-Trajektorie des Fahrzeugs zu erzeugen und zu variieren.

Die synthetischen Eingangsszenarien werden basierend auf den parametrisierten Trajektorien mittels Parametervariation solange variiert, bis das zu testende Sub-Systems die unplausible Systemreaktion auf ein konkretes Szenario zeigt.

Das gefundene nachgebildete Szenario entspricht einem konkreten Szenario, das in einem Bereich eines logischen Szenarios liegt. Das logische Szenario umfasst ein Modell mit Parameterbereichen in einem Zustandsraum, wobei zu jedem Parameter des Modells ein spezifischer Wert innerhalb eines zulässigen Wertebereiches zugeordnet werden kann. Aus einem logischen Szenario können innerhalb des zulässigen Parametersatzes unterschiedliche konkrete Szenarien abgeleitet werden, auf dessen Basis die Eingangsdaten zum Einspielen in das nachgebildete Fahrzeugsystem mittels Simulation erzeugt werden.

Gemäß einer Weiterbildung des Verfahrens kann mittels einer Rendering-Einrichtung für das synthetische Eingangsszenario eine bewegte Bildszene erzeugt werden, wobei die bewegte Bildszene einer Objekterkennungseinrichtung des Prüfstandfahrzeugsystems auf dem Prüfstand zugeführt werden.

Fahrerassistenz bzw. ADAS-Funktionen basieren häufig auf einer kamerabasierten Umfeldperzeption. Ein entsprechendes System wird daher häufig aus einem Zusammenspiel einer sensorbasierten Umfelderfassung, einer Wahrnehmung des dynamischen Umfelds, einer Reaktionsplanung und einer Aktorik gebildet. Durch ein Rendering kann eine ADAS-Funktion von einem synthetischen Eingangssignal bis zu einem Steuersignal zum Eingriff in die Fahrzeugaktuatoren auf dem Prüfstand getestet werden. Im Wesentlichen müssen lediglich die physikalischen Wechselwirkungen zwischen dem Fahrzeug und seiner Fahrzeugumgebung durch das Simulationssystem nachgebildet werden.

Gemäß einer Weiterbildung des Verfahrens kann das nachgebildete ausgewählte konkrete Szenario mittels Parametervariation variiert werden, sodass darauf basierend eine Anzahl variierter nachgebildeter Szenarien erzeugt wird, und wobei zu jedem variierten nachgebildeten Szenario zugehörige Eingangsdaten erzeugt und an die Einrichtungen auf dem Prüfstand kommuniziert werden, und wobei Reaktionen des Sub-Systems und/oder der Einrichtungen des Prüfstandfahrzeugsystems erfasst und/oder analysiert werden. Somit kann eine systematische Ursachenanalyse einer unplausiblen Systemreaktion auf dem Prüfstand erfolgen, die während einer realen Testfahrt aufgetreten ist.

Nach einem weiteren Aspekt der Erfindung wird die Aufgabe gelöst durch ein Computerprogramm, das, wenn es auf einer Recheneinheit eines Simulationssystems ausgeführt wird, die jeweilige Recheneinheit anleitet, das Verfahren auszuführen.

Nach einem weiteren Aspekt der Erfindung wird die Aufgabe gelöst durch ein System zum Testen wenigstens eines Sub-Systems einer E/E-Fahrzeugarchitektur, umfassend einen Prüfstand und ein Simulationssystem, wobei auf dem Prüfstand Einrichtungen der E/E-Fahrzeugarchitektur angeordnet und mit dem Simulationssystem verbunden sind, wobei das System ausgebildet ist, das Verfahren auszuführen.

### Kurze Beschreibung der Zeichnungsfiguren

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen. Dabei zeigen:
- Figur 1: zeigt ein Fahrzeug mit einem Fahrzeugsystem, das ein zu testendes Spurhalteassistenzsystem umfasst,
- Figur 2: zeigt ein Prüfstand mit einer Nachbildung des Fahrzeugsystems,
- Figur 3: zeigt das Fahrzeug während einer Testfahrt, mit einer plausiblen Reaktion und einer unplausiblen Reaktion des Spurhalteassistenzsystem;
- Figur 4: zeigt Schritte eines Verfahrens zum Testen wenigstens eines Sub-Systems einer E/E-Fahrzeugarchitektur für ein Fahrzeug, mit denen ein reales Szenario in einer Verkehrssimulation nachgebildet wird.

### Beschreibung der Ausführungsarten

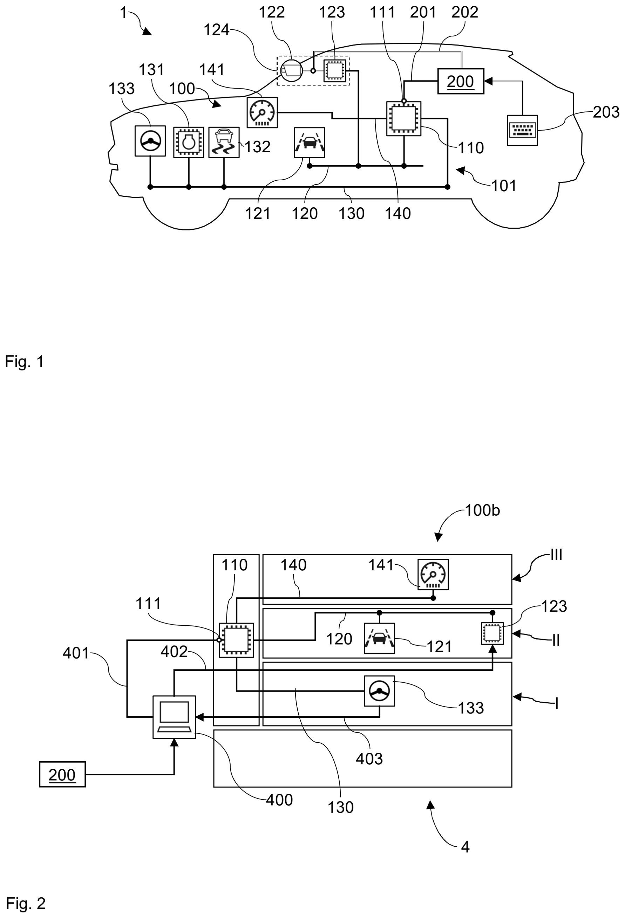

Die Figur 1 zeigt ein Fahrzeug 1 mit einem elektrischen/elektronischen (E/E) Fahrzeugsystem 100, das auf einer verteilten E/E-Architektur (engl. Distributed E/E Architecture) basiert und eine Anzahl Steuergeräte (engl. Electronic Control Unit, ECU), Sensoren und Aktoren umfasst. Das Fahrzeugsystem 100 besitzt ein Steuergerätenetzwerk 101, das in drei Teilbereiche gegliedert ist. Jeder Teilbereich bildet ein Sub-Netzwerk mit einer Bus- bzw. Netzwerkleitung 120, 130 und 140, die beispielsweise als CAN-Bus (engl. Controller Area Network) ausgebildet sind. Alternativ und/oder ergänzend kann ein Automotive-Ethernet-Netzwerk oder ein anderes für Automobilanwendungen geeignetes Netzwerk mit zugehörigem Kommunikationsprotokollen in den Teilbereichen Verwendung finden. Das Steuergerätenetzwerk 101 besitzt ferner ein zentrales Gateway 20, das die Bus- bzw. Netzwerkleitungen 120, 130 und 140 datentechnisch miteinander verbindet und eine Kommunikation über die Grenzen der Sub-Netzwerke hinweg ermöglicht.

Ein erstes Teilnetzwerk fasst die wesentlichen elektronischen Einrichtungen für eine Anzahl von Fahrerassistenzsystemen zusammen, mit denen das Fahrzeug 1 ausgestattet ist. Das Fahrzeug 1 verfügt im vorliegenden Beispiel über ein Spurhalteassistenzsystem (Lane Keep Assistant, LKA), das unter anderem durch ein mikroprozessorbasiertes LKA-Steuergerät 121 im Zusammenwirken mit einer Umfelderfassungseinrichtung 124 gebildet wird, die über einen ADAS-Bus 120 miteinander vernetzt sind.

Das LKA-Steuergerät 121 ist ausgebildet, basierend auf empfangenen Objektdaten zu einem aktuellen Fahrzeugumfeld, Warnmeldungen und/oder Steuerbefehle für Korrektureingriffe in die Querführung des Fahrzeugs 1 zu erzeugen, wenn das Fahrzeug 1 droht, einen aktuell befahrenen Fahrstreifen 42 unbeabsichtigt zu verlassen.

Die Umfelderfassungseinrichtung 124 umfasst eine, an einer Windschutzscheibe des Fahrzeugs 1 angeordnete Kamera 122 und eine zugeordnete Objekterkennungseinrichtung 123. Die Objekterkennungseinrichtung 123 kann eine mikroprozessorbasierte Recheneinrichtung besitzen, in der ein softwareimplementiertes Objekterkennungsmodell eingebettet ist. Die Objekterkennungseinrichtung 123 ermöglicht eine Erkennung, Klassifikation und Lokalisierung von Objekten in einem aktuellen Fahrzeugumfeld. Die Objekterkennungseinrichtung 123 ist ausgebildet, das eingebettete Objekterkennungsmodell auf Bildsignaldaten anzuwenden, die von der Kamera 122 empfangen werden. Mit einer vorbestimmten Wiederhohlfrequenz werden Datensätze mit aktuellen Objektlisten mittels CAN-Nachrichten auf dem ADAS-Bus 22 kommuniziert. Das LKA-Steuergerät 121 ist ausgebildet, die Objektlisten zu empfangen und Daten über erkannte Fahrbahnmarkierungen aus den Objektlisten zu filtern.

Das LKA-Steuergerät 121 ist ausgebildet Warnmeldungen und/oder Steuerbefehle für Querführungseingriffe auf den ADAS-Bus 120 auszugeben. Nachrichten mit entsprechenden Steuerdaten können von dem Gateway 110 empfangen werden, so dass die Steuerdaten zwecks Weiterleitung mittels neuer Nachrichten auf einen Antriebs-Bus 130 und einem Informations-Bus 140 ausgegeben werden.

Der Antriebs-Bus 130 umfasst beispielhaft ein Motorsteuergerät 131, ein ESP-Steuergerät 132 und ein EPS- (engl. Electric Power Steering) Steuergerät 133 zur Ansteuerung einer hilfskraftunterstützten Lenkeinrichtung. Das EPS-Steuergerät 133 ist ausgebildet, die über das Gateway 110 vom ADAS-Bus 120 auf den Antriebs-Bus 130 weitergeleiteten Steuerdaten über Steuerbefehle für einen Korrektureingriff in die Querführung zu empfangen und die Lenkeinrichtung entsprechend anzusteuern.

An dem Informations-Bus 140 ist ein Fahrerinformationsdisplay 141 angeschlossen, das ausgebildet ist, die vom Gateway 110 weitergeleiteten Nachrichten mit Steuerdaten über die Warnmeldung und/oder die Steuerbefehle zum Korrektureingriff in die Querführung zu empfangen. Das Fahrerinformationsdisplay 141 ist ferner eingerichtet, in Abhängigkeit von empfangenen Steuerbefehlen eine Information über einen LKA-Eingriff mittels einem Kontrollsymbol 142 an einen Fahrer wiederzugeben.

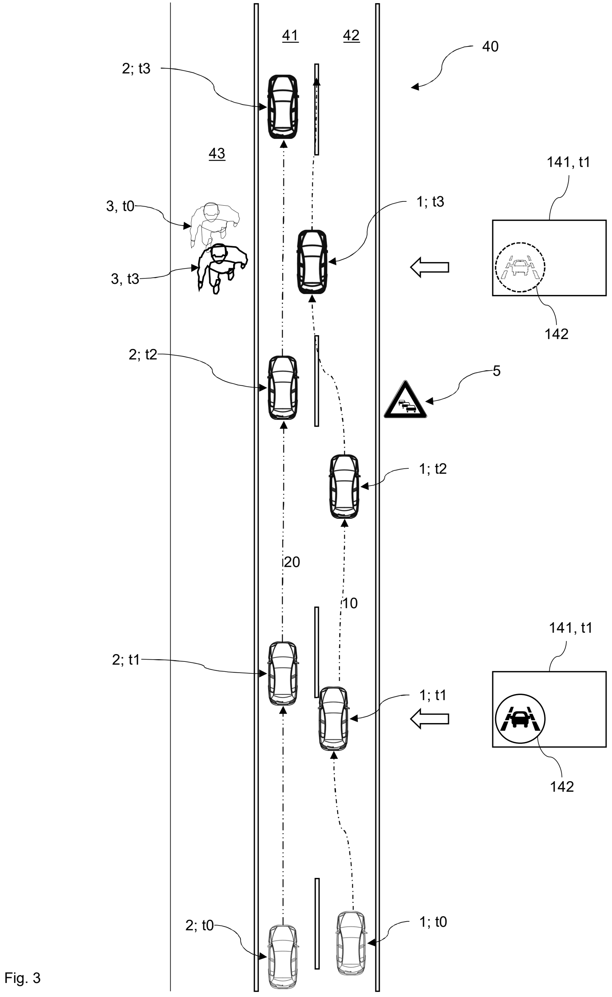

Bei dem erfindungsgemäßen Verfahren zum Testen eines Sub-Systems wird mit dem Fahrzeug 1 zunächst eine Testfahrt auf einer öffentlichen Straße durchgeführt. Während der Testfahrt ist ein Datenlogger 200 über eine Datenleitung 201 mit einer Schnittstelle 111 mit dem Gateway 110 verbunden. Über die Schnittstelle 111 wird dem Datenlogger 200 ein Lesezugriff auf alle Netzwerkleitungen 120, 130 und 140 des Fahrzeugsystems 100 ermöglicht, so dass die BUS-Kommunikation aufgezeichnet werden kann. Der Datenlogger 200 ist ferner über eine Kamerabild-Signalleitung 202 mit der Kamera 122 verbunden, so dass zu den empfangenen Bus-Daten aus dem Fahrzeugsystem 100 zeitlich synchrone Bildsignaldaten aus dem Fahrzeugumfeld aufgezeichnet werden. Der Datenlogger 200 verfügt ferner über ein Eingabemittel 203, mit dem ein Testfahrer synchron zu den empfangenen Bus- und Bildsignaldaten Anmerkungen aufzeichnen kann
In der Figur 3 ist ein zeitlicher Verlauf eines Verkehrsszenarios während der Testfahrt in einem örtlichen Umfeld 40 einer Straße dargestellt. Die Straße umfasst eine Fahrbahn mit einem linken Fahrstreifen 41 und einem rechten Fahrstreifen 42 für eine Fahrtrichtung. Neben dem linken Fahrstreifen befindet sich ein Gehweg 43.

Auf dem rechten Fahrstreifen 42 fährt das Fahrzeug 1. Auf der linken Fahrspur 41 fährt ein zweites Fahrzeug 2, das eine etwas größere Geschwindigkeit aufweist als das Fahrzeug 1. Die Positionen der Fahrzeuge 1 und 2 auf der Straße sind zu vier Zeitpunkten t0 bis t3 dargestellt.

Zwischen den Zeitpunkten t0 und t1 driftet das Fahrzeug 1 zur linken Seite und tangiert zum Zeitpunkt t1 die Leitlinie zwischen dem rechten und linken Fahrstreifen 42 und 41. Im Fahrerinformationsdisplay 141 wird mittels dem Kontrollsymbol 142 ein LKA-Eingriff an den Testfahrer signalisiert. Ferner erfolgt eine assistenzsystemgestützte Lenkkorrektur, so dass das Fahrzeug 1 zum Zeitpunkt t2 ordnungsgemäß in den rechten Fahrstreifen 42 zurückgelenkt worden ist.

Nach dem zweiten Zeitpunkt t2 driftet das Fahrzeug 1 erneut in Richtung des linken Fahrstreifens 41, sodass die Leitlinie zum Zeitpunkt t3 überfahren worden ist. Der Testfahrer nimmt keinen LKA-Lenkeingriff war und erkennt ferner, dass auch eine Spurverlassenswarnung durch das Kontrollsymbol 142 nicht signalisiert wurde. Der Testfahrer erkennt eine falsch-negativ-Auslösung des LKA-Systems und kennzeichnet mittels dem Eingabemittel 202 in der Datenaufzeichnung des Datenloggers 200 einen aktuellen Zeitpunkt einer unplausiblen Systemreaktion. Eine Ursachenanalyse für die unplausible Reaktion des LKA-Systems, soll mittels HIL-Methoden erfolgen.

Dazu wird das Fahrzeugsystem 100 im Fahrzeug 1 als Prüfstandfahrzeugsystem 100b auf einem Prüfstand 4 zumindest teilweise nachgebildet, wie in der Figur 2 dargestellt ist. Das Prüfstandfahrzeugsystem 100b auf dem Prüfstand 4 basiert auf derselben E/E-Architektur, wie das Fahrzeugsystem 100 im Fahrzeug 1. Das Prüfstandfahrzeugsystem 100b bildet somit einen Zwilling des Fahrzeugsystems 100 im Fahrzeug 1, wobei nicht alle elektrischen/elektronischen Einrichtungen auf dem Prüfstand 4 vorhanden sein müssen. Ferner können die elektronischen Einrichtungen mittels Einzelverkabelung verbunden sein, sodass keine Kopie eines fahrzeugspezifischen Kabelsatzes auf dem Prüfstand Verwendung finden muss.

Ein regalförmiges Gestell (engl. Rack) des Prüfstands besitzt drei Tablare I, II und III, die übereinander angeordnet sind und Nachbildungen der elektronischen Einrichtungen der jeweiligen Sub-Netzwerke aufnehmen.

Das untere Tablar I beinhaltet eine Nachbildung des Antriebs-Bus 130 mit dem EPS-Steuergerät 133. Wie der Figur 2 zu entnehmen ist, wurde das Motorsteuergerät 131 und das ESP-Steuergerät 132 auf dem Prüfstand 4 nicht in Form von Hardware-Komponenten nachgebildet.

Eine Nachbildung des ADAS-Bus 120 ist zusammen mit jeweils einem Zwilling des LKA-Steuergeräts 121 und der Objekterkennungseinrichtung 123 im mittleren Tablar II angeordnet. Im Gegensatz zu dem Fahrzeugsystem 100 im Fahrzeug 1 ist die Objekterkennungseinrichtung 123 jedoch nicht mit einer Kamera verbunden.

Das obere Tablar III beinhaltet eine Nachbildung des Informations-Bus 140 mit einem Zwilling des Fahrerinformationsdisplays 141 aus dem Fahrzeug 1.

Dem Prüfstand 4 ist ein Simulationssystem 400 zugeordnet, dass unter anderem über elektronische Einrichtungen für eine Restbussimulation besitzt. Das Simulationssystem 400 ist über die Schnittstelle 111 mit einem Zwilling des Gateways 110 verbunden, wobei die Schnittstelle 111 für das Simulationssystem 400 einen direkten Schreib-/Lesezugriff auf alle drei Busleitungen 120, 130 und 140 des Prüfstandfahrzeugsystems 100b ermöglicht.

Das Simulationssystem 400 ist ausgebildet, eine Datenkommunikation von solchen elektronischen Einrichtungen der E/E-Architektur zu simulieren, die auf dem Prüfstand 4 nicht nachgebildet sind (Restbussimulation). Insbesondere können Nachrichten mit Daten über Sensorsignale zur Umfeldperzeption und/oder über Fahrzeugbetriebszustände mittels einer Simulation erzeugt und auf den entsprechenden Busleitungen 120, 130 und 140 ausgegeben werden.

Das Simulationssystem 400 besitzt eine Verkehrssimulation, mit der Verkehrsszenarien simuliert werden können, die zum Testen eines jeweiligen SuT relevant sind. Das Fahrzeug 1 wird in der Verkehrssimulation durch ein Fahrzeugmodell in einem modellierten Fahrzeugumfeld nachgebildet, das ausgebildet ist, mit den elektronischen Einrichtungen des Prüfstandfahrzeugsystems 100b auf dem Prüfstand 4 zu interagieren. Das Simulationssystem 400 ist mittels der Verkehrssimulation und einer zugeordneten Rendering-Einrichtung ferner ausgebildet, ein computergeneriertes Bild über ein aktuelles Fahrzeugumfeld zu erzeugen, das eine Perspektive der Kamera 122 des Fahrzeugs 1 entspricht. Das computergenerierte Bild wird mittels einer Bildsignalleitung 402 an die nachgebildete Objekterkennungseinrichtung 123 übertragen. Über eine weitere Signalleitung 403 werden elektrische Signale zur Ansteuerung einer Lenkeinrichtung von einem nachgebildeten EPS-Steuergerät 133 auf dem Prüfstand 4 an das Simulationssystem 400 rückgekoppelt. Ein jeweiliges SuT kann somit mittels Hardware-In-The-Loop- (HIL-) Methoden im Zusammenwirken von Prüfstand 4 und dem zugeordneten Simulationssystem 400 getestet werden.

Eine Aufgabe hinter dem erfindungsgemäßen Verfahren ist, das Verhalten eines zu testenden Sub-Systems aus einer realen Testfahrt auf dem HIL-basierten Prüfstand 4 derart nachzubilden, dass eine Fehlersuche effizient und einfach möglich wird.

Szenarien im Zusammenhang mit Methoden zum systematischen Testen und/oder Validieren von Fahrerassistenzsystemen können in funktionale, logische und konkrete Szenarien unterteilt werden.

Funktionale Szenarien beschreiben auf einer sprachlichen Abstraktionsebene eines Experten auf dem Gebiet des Testens- und/oder Validierens von Fahrerassistenzsystemen, wie auch der Testfahrer in dem vorliegenden Beispiel einer ist, relevante Situationen, die ein SuT auch in kritischen Situationen beherrschen muss. Aus den funktionalen Szenarien können logische Szenarien abgeleitet werden, die Parameterbereiche in einem physikalischen Zustandsraum entsprechender Situationen beschreiben.

Die Verkehrssimulation des Simulationssystems 400 kann basierend auf einer Gruppe logischer Szenarien, die für die funktionalen Anforderungen des zu Testenden Spurhalteassistenzsystems relevant sind, mittels Parametervariation eine Vielzahl von konkreten Szenarien simulieren und korrespondierende Daten erzeugen, die in das Steuergerätenetzwerk 101 eingespielt werden.

Die mit dem Datenlogger 200 aufgezeichneten Daten beschreiben über einen bestimmten Zeitraum ein reales Szenario, bei dem eine unplausible Systemreaktion des SuT aufgetreten ist. Ein relevanter Zeitraum des realen Szenarios kann über die vom Testfahrer gesetzte Markierung in den Daten ermittelt werden.

Für eine systematische Ursachenanalyse der unplausiblen Systemreaktion des SuT mittels HIL-Prüfstand ist es erforderlich, das reale Szenario mittels Verkehrssimulation nachzubilden. Die aufgezeichneten Daten beschreiben jedoch nur ein konkretes Szenario aus einer Perspektive des Fahrzeugs 1.

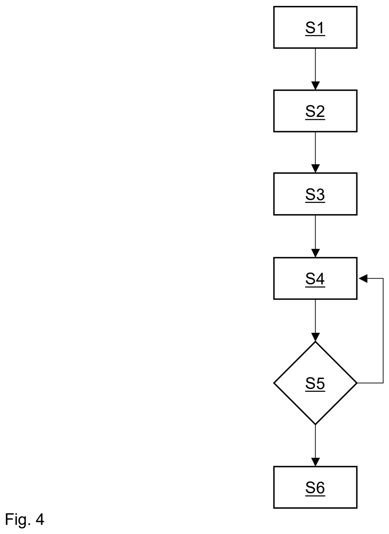

Die Figur 4 zeigt die wesentlichen Schritte eines Verfahrens zum Testen wenigstens eines Sub-Systems einer E/E-Fahrzeugarchitektur, mit denen ein reales Szenario in bzw. für eine Verkehrssimulation nachgebildet wird.

In einem ersten Schritt S1 werden die aufgezeichneten Bus- und synchronen Bildsignaldaten für einen ausgewählten Zeitraum, der für das reale Szenario relevant ist, dem Simulationssystem 400 bereitgestellt. Aus den aufgezeichneten Bus-Daten werden über den Zeitraum t0 bis t3 Längs- und Querbewegungsinformationen über das Fahrzeug 1 extrahiert und eine Ego-Trajektorie für das Fahrzeug 1 während des realen Szenarios ermittelt. In einem zweiten Schritt S2 werden die Bildsignaldaten einer Objekterkennung innerhalb des Simulationssystems 400 zugeführt, sodass für den Zeitraum t0 bis t3 beispielsweise mittels semantischer Segmentierung ein dynamischer Verlauf der Straße 40 und den Fahrstreifen 41 und 42 ermittelt werden. Ferner werden Bewegungen von anderen Verkehrsteilnehmern 2 und 3 und statischen Objekten 5 relativ zum Fahrzeug 1 ermittelt. Basierend auf der Ego-Trajektorie des Fahrzeugs 1 wird in einem dritten Schritt S3 ein Umfeldmodell über das Fahrzeugumfeld mit einem statischen Straßen- bzw. Fahrstreifenverlauf und ortsfesten Positionen der statischen Objekte 5 im Fahrzeugumfeld ermittelt. Ferner werden Trajektorien für die anderen Verkehrsteilnehmer 2 und 3 basierend auf der Ego-Trajektorie des Fahrzeugs und den entsprechenden Relativbewegungen bestimmt.

In einem vierten Schritt S4 wird mittels dem Simulationssystem 400 und basierend auf dem Umfeldmodell sowie auf Modellen für das Fahrzeug 1 und Modellen für die weiteren Verkehrsteilnehmer eine Verkehrssimulation durchgeführt, mit dem Ziel das reale Szenario entsprechend der Trajektorien für das Fahrzeug 1 und den weiteren Verkehrsteilnehmern 2 und 3 durch ein synthetisches Eingangsszenario nachzubilden. Das Simulationssystem 400 erzeugt während eines Simulationsdurchganges mittels einer Rendering-Einrichtung ein computergeneriertes Bild über ein aktuelles Fahrzeugumfeld, das als ein Bildsignal an die Objekterkennungseinrichtung 123 auf dem Prüfstand 4 übertragen wird. Basierend auf dem Fahrzeugmodell wird während des Schritts S4 ferner eine Restbussimulation durchgeführt, sodass korrespondierende BUS-Daten an die Einrichtungen des Prüfstandfahrzeugsystems (100b) kommuniziert werden. Ferner werden BUS-Daten von den Einrichtungen des Prüfstandfahrzeugsystems (100b) durch das Simulationssystem 400 empfangen und entsprechend dem Fahrzeugmodell verarbeitet.

In einem fünften Schritt S5 wird eine Systemreaktion, des auf dem Prüfstand 4 nachgebildeten zu testenden Sub-Systems, auf das synthetische Eingangsszenario mit der Systemreaktion, des Sub-Systems im Fahrzeug, auf das reale Szenario verglichen.

Weisen die Systemreaktionen eine ausreichende Ähnlichkeit auf, wird in dem sechsten Schritt 6 das synthetische Eingangsszenario als nachgebildetes Szenario ausgewählt. Haben sind die Systemreaktionen hingegen nicht ausreichend ähnlich, wird der vierte Schritt S4 nach einer Variation des synthetischen Eingangsszenarios erneut durchlaufen. Obwohl der Gegenstand im Detail durch Ausführungsbeispiele näher illustriert und erläutert wurde, so ist die Erfindung nicht durch die offenbarten Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

### Liste der Bezugszeichen

| | |
|---|---|
| | |
| 1 | Fahrzeug |
| 2 | zweites Fahrzeug |
| 3 | Fußgänger |
| 10 | Ego-Trajektorie |
| 20 | Trajektorie des zweiten Fahrzeugs |
| 40 | Umfeld |
| 41 | linke Fahrspur |
| 42 | rechte Fahrspur |
| 43 | Gehweg |
| 100a, 100b | Fahrzeugsystem, Prüfstandfahrzeugsystem |
| 101 | Steuergerätenetzwerk |
| 110 | Gateway |
| 111 | Schnittstelle |
| 120 | ADAS-Bus |
| 130 | Antriebs-Bus |
| 140 | Informations-Bus |
| 141 | Fahrerinformationsdisplay |
| 142 | Kontrollsymbol |
| 121 | LKA-Steuergerät, SuT |
| 122 | Kamera |
| 123 | Recheneinrichtung mit Objekterkennungsmodell |
| 200 | Datenlogger |
| 201 | Datenleitung |
| 202 | Kamerabild-Signalleitung |
| 4 | Prüfstand |
| 400 | Simulationssystem |
| 401 | Datenleitung |
| 402 | Bildsignalleitung |
| 5 | Schild mit Zeichen |

## Patentansprüche

1. Verfahren zum Testen wenigstens eines Sub-Systems einer E/E-Fahrzeugarchitektur für ein Fahrzeug (1), wobei ein Prüfstandfahrzeugsystem (100b) mit Einrichtungen der E/E-Fahrzeugarchitektur auf einem Prüfstand (4) angeordnet und mit einem Simulationssystem (400) verbunden wird, wobei ein Ausgansszenario, das mit einer unplausiblen Systemreaktion des zu testenden Sub-Systems korrespondiert, mit dem Simulationssystem (400) basierend auf mit dem Ausgangsszenario zeitlich korrespondierenden aufgezeichneten Daten nachgebildet wird, wobei durch das Simulationssystem (400) ein synthetisches Eingangsszenario erzeugt wird, und wobei aus dem synthetischen Eingangsszenario zugehörige Eingangsdaten abgeleitet an die Einrichtungen auf dem Prüfstand (4) kommuniziert werden, und wobei das synthetische Eingangsszenario solange variiert wird, bis das zu testende Sub-System eine der unplausiblen Systemreaktion vergleichbare Reaktion zeigt, so dass eine zur vergleichbaren Reaktion zugehörige Variation des synthetische Eingangsszenario als ein nachgebildetes Szenario ausgewählt wird.

2. Verfahren nach vorstehendem Anspruch 1, wobei ein Fahrzeugsystem (100) der E/E-Fahrzeugarchitektur in einem Fahrzeugs (1) mit einer Datenaufzeichnungseinrichtung (200) verbunden worden ist, und wobei während einer Testfahrt mit dem Fahrzeug (1) im E/E-Fahrzeugsystem (100) erfasste und/oder kommunizierte Daten aufgezeichnet worden sind, und wobei Szenarien während der Testfahrt, bei denen eine unplausible Reaktion des Sub-Systems festgestellt wurde, in den aufgezeichneten Daten markiert worden sind.

3. Verfahren nach einem der vorstehenden Ansprüchen, wobei basierende auf den zeitlich zu dem Ausgansszenario korrespondierenden aufgezeichneten Daten, eine parametrisierte Ego-Trajektorie des Fahrzeugs (1) bestimmt wird.

4. Verfahren nach vorstehenden Anspruch 3, wobei basierend auf zeitlich zu dem Ausgansszenario korrespondierenden aufgezeichneten Umfelddaten des Fahrzeugs (1), Objekte erkannt werden, und wobei für erkannte dynamische Objekte jeweils eine parametrisierte Trajektorie bestimmt wird.

5. Verfahren nach vorstehenden Anspruch 4, wobei die Objekte mittels einer Kl-basierten Objekterkennung, insbesondere mittels einer semantischen Segmentierung erkannt werden.

6. Verfahren nach einem der vorstehenden Ansprüche 4 oder 5, wobei das synthetische Eingangsszenario basierend auf den parametrisierten Trajektorie der dynamischen Objekte und der parametrisierten Ego-Trajektorie des Fahrzeugs (1) erzeugt und variiert werden.

7. Verfahren nach einem der vorstehenden Ansprüchen, wobei mittels einer Rendering-Einrichtung für das synthetische Eingangsszenario eine bewegte Bildszene erzeugt wird, und wobei die bewegte Bildszene einer Objekterkennungseinrichtung des Prüfstandfahrzeugsystem (100b) zugeführt wird.

8. Verfahren nach einem der vorstehenden Ansprüchen, wobei das als nachgebildet ausgewählte konkrete Szenario mittels Parametervariation variiert wird, sodass darauf basierend eine Anzahl variierter nachgebildeter Szenarien erzeugt wird, und wobei zu jedem variierten nachgebildeten Szenario zugehörige Eingangsdaten erzeugt und an die Einrichtungen auf dem Prüfstand (4) kommuniziert werden, und wobei Reaktionen des Sub-Systems und/oder der Einrichtungen des Prüfstandfahrzeugsystems (100b) erfasst und/oder analysiert werden.

9. Computerprogramm, das, wenn es auf einer Recheneinheit eines Simulationssystems (100) ausgeführt wird, die jeweilige Recheneinheit anleitet, ein Verfahren nach einem der Ansprüche 1 bis 8 auszuführen.

10. System zum Testen wenigstens eines Sub-Systems einer E/E-Fahrzeugarchitektur, umfassend einen Prüfstand (4) und ein Simulationssystem (400), wobei auf dem Prüfstand (4) Einrichtungen der E/E-Fahrzeugarchitektur angeordnet und mit dem Simulationssystem (400) verbunden sind, wobei das System ausgebildet ist, ein Verfahren gemäß einem der Ansprüche 1 bis 8 auszuführen.
